# EUROPEAN PATENT SPECIFICATION

(11) **EP 3 795 438 B1**
(45) Date of publication and mention of the grant of the patent: **20.04.2022**
(21) Application number: 19197696.8
(22) Date of filing: 17.09.2019
(51) Int. Cl.: B60T 15/04, G05G 1/04, G05G 5/00, B60T 7/10

(54) **HAND BRAKE VALVE**
HANDBREMSVENTIL
SOUPAPE DE FREIN À MAIN

(43) Date of publication of application: 24.03.2021
(73) Proprietor: ZF CV Systems Europe BV, 1170 Brussels (BE)
(72) Inventor: DRELICH, Lukasz, 42-215 Czestochowa (PL); SWIATEK, Pawel, 54-616 Wroclaw (PL); TANAKA, Nobuyuki, Tokyo, Tokyo 178-0061 (JP); ZABIEGLO, Wojciech, 58-500 Jelenia Gora (PL)
(74) Representative: Rabe, Dirk-Heinrich

(56) References cited:
- EP-A2- 1 900 583
- EP-B1- 2 877 377
- DE-A1-102012 107 203

## Description

### FIELD OF THE INVENTION

The present invention relates to a Hand Brake Valve (HBV) that is used for applying brakes, in particular parking brakes of a vehicle.

### BACKGROUND OF THE INVENTION

One of the prerequisites of the hand brake valve used in an automobile such as a truck is its robustness during operation. Said robustness is generally measured through the number of operating cycles the hand brake valve is capable of undergoing.

As per the state of the art, in general, the hand brake valve includes an actuating rod that is configured to assist in shifting between brake positions of e.g., 'engaged' or 'disengaged'. At one of two ends of the actuating rod, a handle knob may be provided. One such brake valve with the actuating rod is disclosed, for instance, in US5439276, a patent publication. It could be derived from such hand brake valves that due to the operating factors, the actuating rod hits two ends of a slot provided when its position along a rail or a slot is changed. A variety of configurations of such slots are provided for the directing the movement of the actuating rod. One such example of the slots is disclosed, for instance, in Fig. 5b of US patent publication 20060244306. The European Patent Publication EP 2 877 377 B1 discloses an operation rod with two opposite flat surfaces and a recess for limiting the movement of an annular element sliding along the rod.

It follows form the above that when the actuating rod hits the ends of the disclosed slots due to their movement, they experience a bending moment at the points of contact. For a device manufacture of the hand brake valves, the number of cycles of operations that the actuating rod may withstand is one of the engineering objectives. The present invention is directed to increase the number of cycles of operations of the actuating rod of the hand brake valve.

### SUMMARY OF THE INVENTION

The hand brake valve of the present invention is capable of operating 500000 operating cycles during its usage. It is one of the objectives of the present invention to achieve the mentioned number of the operating cycles.

Accordingly, in an embodiment, an assembly for a hand brake valve of a vehicle is provided. The assembly comprises an actuating rod that is configured to assist in shifting brake positions of the hand brake valve, wherein the actuating rod includes two opposing substantially flat surfaces; and a plastic ring comprising two arms. Further, each of the two opposing substantially flat surfaces of the actuating rod includes at least two dents and at least a portion of each of the two arms of the plastic ring is received within the respective dent. One of the technical advantages of the present embodiment, is that e.g., section modulus of said rod at dents ('D') is different in comparison to other regions of the rod. For instance, due to the movement of the actuation rod caused primarily because of the actuation by the driver of the vehicle either to engage or disengage the hand brake or parking brake, the rod experiences bending moment at certain regions along its length. The amount of material of the rod is relatively smaller at e.g., the area surrounding the dents owing to its reduced cross section in comparison to the other regions of the rod. While a circumferential slot along the outer surface of the rod can be envisaged, the design properties have been found to be considerably advantageous with the provision of the dents ('D') on the substantially flat surfaces of the rod. For instance, 500000 operating cycles has been found to be feasible with a hand brake valve incorporating rod 100 in it, without any fatigue and/or failure.

In accordance with an embodiment, in the assembly for the hand brake valve according as explained above, the plastic ring is assembled to the actuating rod by separating the arms and positioning said portion of the arms at the dent of the actuating rod, respectively. The assembly is simplified by this arrangement of the plastic ring. For instance, a person working in the production line of the hand brake valve can simply separate the arms and place it at the dents with certain level of approximation without much of a room for the error during the assembly.

It is also realized in an embodiment, that the assembly for the hand brake valve explained above, wherein the portion of the arms of the plastic ring that is received within the dents of the actuating rod includes a protrusion on each of the arms, and wherein the protrusion snugly engages with the dents provided on the substantially flat surfaces of the actuating rod arresting the movement of the plastic ring in relation to the actuating rod in at least one direction. The hand brake valve of the present embodiment has the technical advantage of a directed linear reciprocating motion enabled by the dents. The arms of the plastic ring can simply slide 'up' and 'down' in relation to a longitudinal axis. For instance, there are certain actuating movements of the hand brake valve where a knob disposed above the rod needs to linearly reciprocate to engage or disengage a parking brake. The assembly of the plastic arms at the dents where at least the portion of the arms of the plastic ring is received enables this limited linear reciprocating motion of the ring in relation to the rod.

In a further illustrative embodiment, in the assembly for the hand brake valve as mentioned above, the plastic ring includes a chamfered surface at the end of each of the two arms. The chamfering saves the usage of material and as apparent to a skilled person may provide benefits in relation to the cost, tooling (e.g., in injection molding since the ring is made of plastic), and generally renders corners with smooth finish and without sharp edges.

Still, in an exemplary embodiment, in the assembly as mentioned above, the plastic ring includes a curvilinear internal surface and the protrusion is provided on said curvilinear internal surface. For instance, the protrusion, as can be derived, assists in the linear reciprocating motion of the plastic ring along the dents of the rod in a limited manner. Further, in the same or different assembly for the hand brake valve of any one of the above claims, the plastic ring has an external surface on which, e.g., a plurality of ribs are provided and the ribs are integral with the plastic ring.

In a yet another embodiment or in one of the above-mentioned embodiments, in the assembly for the hand brake valve, the protrusion of the arms of the plastic ring enables a linear movement of the plastic ring in a direction along the dents of the actuating rod, wherein the enabled linear or reciprocal movement of the plastic ring is parallel to a longitudinal axis of the actuating rod. The technical advantage is to enable certain actuating positions of the hand brake valve when a handle knob is disposed above the actuating rod, wherein said knob can reciprocate to engage or disengage the parking brake of a vehicle.

The assembly for the hand brake valve of any one of the above embodiments provides the plastic ring that is linearly displaceable along a longitudinal axis when the portion of the each of the two arms of the plastic ring is received in the respective dent, wherein the linear displacement of the plastic ring takes place along a direction, e.g., parallel to the longitudinal axis, is limited to the extent the dimensions of said dent allows. In other words, the dent is configured to limit the movement or linear movement of the plastic ring in relation to the rod. This is also derivable based on the disclosure provided in the detailed description accompanying the drawings.

Advantages of the different embodiments are disclosed in association with the detailed description of the accompanying drawings.

### BRIEF DESCRIPTION OF THE ACCOMPANYING DRAWINGS

Fig. 1 discloses an actuating rod of a hand brake valve in accordance with an embodiment of the present invention;
Fig. 2a is a cross-sectional view of a plastic ring that is to be assembled with an actuating rod of a hand brake valve in accordance with an embodiment of the present invention;
Fig. 2b is a top or bottom view of a plastic ring that is to be assembled with an actuating rod of a hand brake valve in accordance with an embodiment of the present invention;
Fig. 2c is a perspective view of a plastic ring that is to be assembled with an actuating rod of a hand brake valve in accordance with an embodiment of the present invention; and
Fig. 3 is an assembled view of an actuating rod of a hand brake valve with a plastic ring, in accordance with an embodiment of the present invention.

### DETAILED DESCRIPTION OF THE ACCOMPANYING DRAWINGS

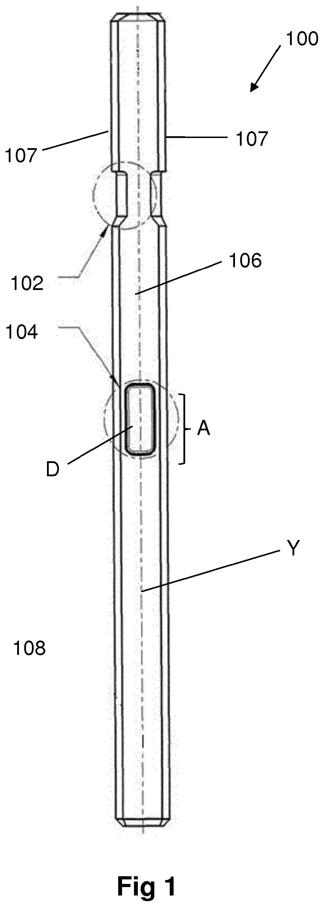

Fig. 1 discloses an actuating rod 100 of a hand brake valve in accordance with an embodiment of the present invention.

In accordance with the present embodiment, actuating rod 100 of the invention is illustrated. It is preferred that actuating rod 100 is approximately between 100 to 200 millimeters long or 10 to 20 centimeters long. As shown in Fig. 1, rod 100 includes among other things, a substantially flat surface 106. It is noted that rod 100 also has similar flat surface 106 on its other side, but is not shown in Fig. 1. Together, they can be alternatively referred as, opposite facing two substantially flat surfaces 106. The term 'substantially' here indicates, despite the presence of certain unevenness (see, e.g., area marked 'A' in Fig. 1), surface 106 is "substantially flat". Further, rod 100 incudes curved or curvilinear surfaces 107 also facing opposite to each other. In accordance with a preferred embodiment, surfaces 107 opposite to each other are circular in shape.

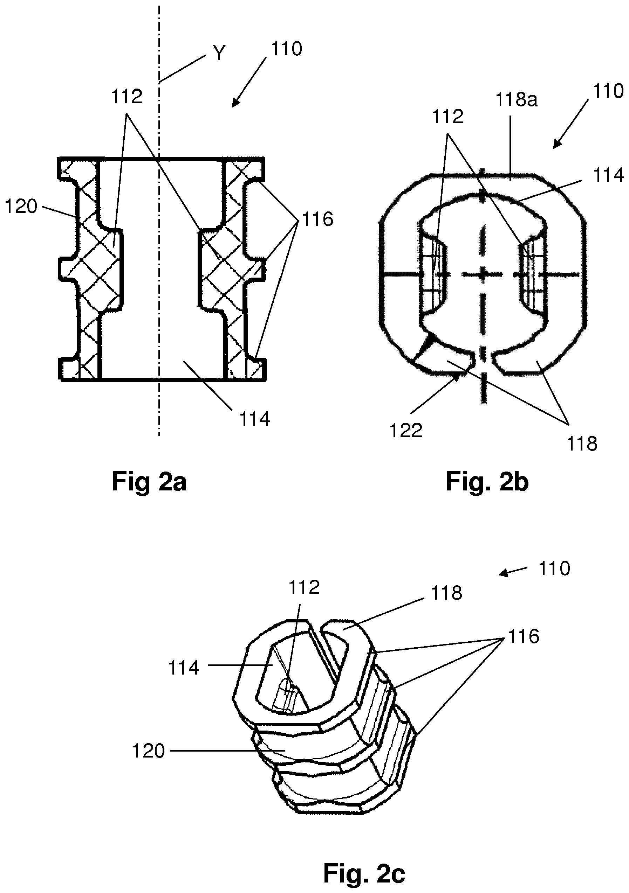

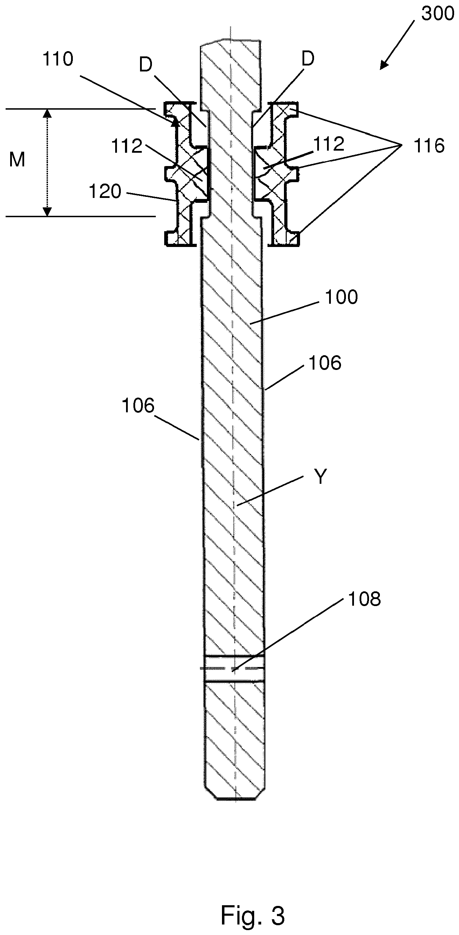

In accordance with the present invention, each of the two opposing substantially flat surfaces 106 of actuating rod 100 includes at least two dents (D). It is also, for instance, derivable that dents (D) on substantially flat surfaces 106 extend in length along axis 'Y'. It may also be derivable to a skilled person that section modulus of rod 100 at dents 'D' is different in comparison to other regions of rod 100. For instance, due to the movement of actuation rod 100 because of the actuation by the driver of the vehicle either to engage or disengage the hand brake or parking brake, rod 100 experiences bending moment at certain regions along its length. The amount of material of rod 100 is relatively smaller owing to its reduced cross section in comparison to the other regions of rod 100. While a circumferential slot along the outer surface of rod 100 at the region marked 'A' in Fig. 1 can be envisaged, the design properties have been found to be considerably advantageous with the provision of dents 'D' on substantially flat surfaces 106 of rod 100 as shown in the figure. For instance, 500000 operating cycles has been found to be feasible with a hand brake valve incorporating rod 100 in it, without any fatigue and/or failure. However, it is noted that a plastic ring (see '110' of Figures 2a to 2c and Fig. 3) in combination with rod 100 may become necessary to achieve this. This is because, under operating conditions, it is possible that the plastic ring may take certain impacts when rod 100 is actuated by the driver of the vehicle.

Furthermore, another area of rod 100 where bending moment may be experienced is marked as '102' which are however not essential for the understanding of the present invention.

Fig. 2a is a cross-sectional view of a plastic ring 110 that is to be assembled with actuating rod 100 of a hand brake valve in accordance with an embodiment of the present invention.

The plastic ring 110 as shown in Fig. 2a clearly shows in the cross-sectional view, protrusions 112 being, for instance, symmetrically arranged in reference to axis 'Y' as shown in Fig. 2a. However, the dimensions of protrusions 112 are provided while taking the design and dimensions of dents 'D' (see Figs. 1 and 3) into account. In addition, three ribs 116 are shown to be provided on an external surface 120 of plastic ring 110 whereas protrusions 112 are provided on an internal surface 114 of plastic ring 110. In accordance with an embodiment, internal surface 114 is curvilinear.

Fig. 2b is a top or bottom view of plastic ring 110 that is to be assembled with actuating rod 100 of a hand brake valve in accordance with an embodiment of the present invention.

In addition to what has been described in reference to Fig. 2a, plastic ring 110 is shown to include two arms 118. In accordance with an embodiment of the present invention, approximately at a junction 118a of two arms 118, the thickness is relatively lesser in comparison to the rest of the arms 118 as can be derived from Fig. 2. The technical effect of having relatively less thickness at junction 118a of two arms 118 is to enable expansion of two arms 118 to a certain degree where it can be placed at dents 'D' of rod 100 easier (see Fig. 3 for the assembled view of rod 100 and plastic ring 110). This lightens the effort required to assemble ring 110 to rod 100 to an operator at an assembly line. For instance, expansion of ring 110 can be merely done with the hands without involvement of any additional tools. As already explained in reference to Fig. 2a, protrusions 112 are provided on internal surface 114 of plastic ring 110, wherein each of the arms 118 includes at least one protrusion 112.

Furthermore, Fig. 2b shows chamfered surface 122 of arms 118 of plastic ring 110.

Fig. 2c is a perspective view of plastic ring 110 that is to be assembled with actuating rod 100 of a hand brake valve in accordance with an embodiment of the present invention. Fig. 2c clearly shows how ribs 116 are arranged on external surface 120 of plastic ring 110.

Fig. 3 is an assembled view of actuating rod 100 of a hand brake valve with plastic ring 110, in accordance with an embodiment of the present invention.

In accordance with the present embodiment, assembly 300 for the hand brake valve of a vehicle is provided. The assembly 300 comprises actuating rod 100 that is configured to assist in shifting brake positions of the hand brake valve, wherein actuating rod 100 includes two opposing substantially flat surfaces 106, and a plastic ring 110 comprising two arms 118, as already explained above. Assembly 300 in particular characterized by each of the two opposing substantially flat surfaces 106 of actuating rod 100 including at least two dents (D) and at least a portion 112 of each of two arms 118 of plastic ring 110 being received within the respective dent (D).

In accordance with the present embodiment, plastic ring 110 is assembled to actuating rod 100 by separating the arms 118 and positioning said portion of arms 118 at the dent (D) of the actuating rod (100). In this regard, relatively lesser thickness of junction 118a (see fig. 2b) explained in conjunction with Fig. 2b is helpful. It is easy to assemble ring 110 with rod 100.

Further, portion 112 or protrusions of arms 118 of plastic ring 110 is received within the dents (D) of actuating rod 100 as can be derived. Further, protrusion 112 or said portion 112 of arms 118 snugly engages with the dents 'D' provided on substantially flat surfaces 106 of actuating rod 100 arresting the movement of the plastic ring 110 in relation to actuating rod 100 in at least one direction. This can also be derived from Fig. 3. For instance, allowed movement of plastic ring 110 within the dents 'D' of actuating rod 100 is marked to be within the length 'M' (see Fig. 3), which is actually length of the dents 'D'. In this context, it should also be noted that, in accordance with the same embodiment protrusion 112 of arms 118 of plastic ring 110 enables a linear movement (along 'M' of Fig. 3) of plastic ring 110 and the direction of said linear movement is along the dents 'D' of actuating rod 100, and also that the enabled linear movement of the plastic ring 110 is parallel to a longitudinal axis 'Y' of actuating rod 100. The provision of arrested movement is particularly advantageous when, for instance, assembly 300 seen in the context being part of the hand brake valve that may include other components. In this context, it may be noted that the linear and/or arrested movement of ring 110 is required for proper functioning of the device or a hand brake valve where rod 100 and ring 110 are implemented. During operation from a drive position to a parking position of said hand brake valve, the handle (which is directly or indirectly connected with ring 110) moves up and down. For instance, in the parking position, the handle may drop down in a slot on another component (e.g., head of the hand brake valve), which makes the position of the hand brake valve stable. In the same instance, in order to release the device from parking position, the handle of the hand brake valve is pulled upwards, which generates also linear movement of ring 110. Such linear movements of ring 110 within dents 'D' is to help change of positions of the hand brake valve from e.g., engaged to disengaged stages. Advantageously, for another instance, such arrested linear displacement of ring 110 within the shown length 'M' of rod 100 may also retain the orientation of ring 110 in its original state in relation to rod 100, especially when there is said impact experienced by assembly 300 due to contact with e.g., other components of the hand brake valve in the vicinity.

In other words and in accordance with yet another embodiment, plastic ring 110 is linearly displaceable along a longitudinal axis 'Y' when portion 112 of the each of two arms 118 of plastic ring 110 is, firstly, received in the respective dent 'D', and subsequently, the linear displacement of plastic ring 110 along longitudinal axis 'Y' is limited to the extent the dimensions e.g., 'M' of said dent 'D' allows ring 110.

Furthermore, as can also be derived from Fig. 3 and other figures 2a to 2c explained above of the present invention, plastic ring 110 has external surface 120, on which plurality of ribs 116 are provided and said ribs are integral with plastic ring 110. Further, in accordance with this embodiment, plastic ring 110 a plurality of ribs 116 on its external surface 120. The number of ribs has been shown to be three for only illustrative purposes.

In an exemplary embodiment of the present invention, actuating rod 100 is made of a metal based material.

It is also noted herewith that assembly 300 is illustrative in nature to show the combination of rod 100 and ring 110 using dents 'D' at said substantially flat surfaces of rod 100. Other attaching mechanisms for ring 110 can also be used for assembling ring 110 with rod 100. For instance, a pin and a slot arrangement can also be provided, For instance, a pin (not shown in figures) can be provided in association with ring 110 instead of 'protrusions 112' and slot(s) or through hole(s) can be created in rod 100. With this provision, ring 110 can be allowed to be linearly displaced or moved along a certain length, e.g., as shown in Fig. 3 with symbol 'M' parallel to axis 'Y'. Simply, 'M' may approximately illustrate a range of movement available for ring 110. Such modifications are possible as a skilled person would envisage those. In any case, such modifications still fall within the purview or scope of at least one claim appended below.

In accordance with the present embodiment, rod 100 may include one or more through holes 108. This through holes 108 may assist assembly 300 to be installed with other components of the hand brake valve such as a pin, or a lever passing through said through holes 108. However, this feature is optional and not necessary to define the invention.

Finally, while different components are explained in reference to different drawings, it is noted that similar reference signs are used to indicate the elements are substantially same, unless explicitly stated in the description.

### LIST OF REFERENCE SIGNS (PART OF THE DESCRIPTION)

100- rod
102- area or region in rod 100 experiencing bending moment
104- area or approximate region where e.g., section modulus of rod 100 is different compared to others
106- two opposing substantially flat surfaces
107- curved or curvilinear surfaces
108- through hole
110- plastic ring
112- protrusion or the portion of ring 110 received within dent(s) 'D' of rod 100
114- curvilinear internal surface
116- ribs
118- arms
118a- junction with relatively lesser thickness than arms
120- external surface
300 - assembly for a hand brake valve
ALPHABETS
A- a region in rod 100 with dent(s) 'D'
D- Dent(s)
M- length indicating a range of movement available for ring 110 along rod 100
Y- vertical or longitudinal axis

## Claims

1. An assembly (300) for a hand brake valve of a vehicle, comprising:
an actuating rod (100) that is configured to assist in shifting brake positions of the hand brake valve, wherein the actuating rod (100) includes two opposing substantially flat surfaces (106); and
a plastic ring (110) comprising two arms (118),
**characterized in that**,
each of the two opposing substantially flat surfaces (106) of the actuating rod (100) includes at least one dent (D) and at least a portion (112) of each of the two arms (118) of the plastic ring (110) is received within the at least one dent (D).

2. The assembly (300) for the hand brake valve according to claim 1, wherein the plastic ring (110) is assembled to the actuating rod (100) by separating the arms (118) and positioning said portion of the arms (118) at the at least one dent (D) of the actuating rod (100).

3. The assembly (300) for the hand brake valve of any one of claims 1 and 2,
wherein the portion (112) of the arms (118) of the plastic ring (110) that is received within the at least one dent (D) of the actuating rod (100) includes a protrusion (112) on each of the arms (118), and wherein the protrusion (112) snugly engages the at least one dent (D) provided on the substantially flat surfaces (106) of the actuating rod (100) arresting the movement of the plastic ring (110) in relation to the actuating rod (100) in at least one direction.

4. The assembly (300) for the hand brake valve of any one of the above claims, wherein the plastic ring (110) includes a chamfered surface (122) at the end of each of the two arms (118).

5. The assembly (300) for the hand brake valve of claim 3, wherein the plastic ring (110) includes a curvilinear internal surface (114) and the protrusion (112) is provided on said curvilinear internal surface (114).

6. The assembly (300) for the hand brake valve of any one of the above claims, wherein the plastic ring (110) has an external surface (120), on which a plurality of ribs (116) are provided and the ribs (116) are integral with the plastic ring (110).

7. The assembly for (300) the hand brake valve of claim 3, wherein the protrusion (112) of the arms (118) of the plastic ring (110) enables a linear movement of the plastic ring (110) in a direction along the dents (D) of the actuating rod (100), wherein the enabled linear movement of the plastic ring (110) is parallel to a longitudinal axis (Y) of the actuating rod (100).

8. The assembly (300) for the hand brake valve of any one of the above claims, wherein the plastic ring (110) is linearly displaceable along a longitudinal axis (Y) when the portion (112) of the each of the two arms (118) of the plastic ring (110) is received in the respective dent (D), wherein the linear displacement of the plastic ring (110) along the longitudinal axis (Y) is limited to the extent the dimensions (M) of said dent (D) allows.

9. The assembly (300) for the hand brake valve of any one of the above claims, wherein the plastic ring (110) includes a junction (118a) with a relatively lesser thickness compared to the two arms (118) of the plastic ring (110).

## Patentansprüche

1. Anordnung (300) für ein Handbremsventil eines Fahrzeugs, die Folgendes umfasst:
eine Betätigungsstange (100), die dazu ausgelegt ist, das Verschieben von Bremspositionen des Handbremsventils zu unterstützen, wobei die Betätigungsstange (100) zwei gegenüberliegende im Wesentlichen flache Flächen (106) beinhaltet; und
einen Kunststoffring (110), der zwei Arme (118) umfasst,
**dadurch gekennzeichnet, dass**,
jede der zwei gegenüberliegenden im Wesentlichen flachen Flächen (106) der Betätigungsstange (100) mindestens eine Vertiefung (D) beinhaltet und mindestens ein Abschnitt (112) jeder der zwei Arme (118) des Kunststoffrings (110) in mindestens eine Vertiefung (D) aufgenommen ist.

2. Anordnung (300) für das Handbremsventil gemäß Anspruch 1, wobei der Kunststoffring (110) durch Trennen der Arme (118) und Positionieren des Abschnitts der Arme (118) an der mindestens einen Vertiefung (D) der Betätigungsstange (100) an der Betätigungsstange (100) montiert wird.

3. Anordnung (300) für das Handbremsventil nach einem der Ansprüche 1 und 2, wobei der Abschnitt (112) der Arme (118) des Kunststoffrings (110), der in die mindestens eine Vertiefung (D) der Betätigungsstange (100) aufgenommen ist, an jedem der Arme (118) einen Vorsprung (112) beinhaltet und wobei der Vorsprung (112) festsitzend in die mindestens eine Vertiefung (D) eingreift, die auf den im Wesentlichen flachen Flächen (106) der Betätigungsstange (100) bereitgestellt ist, wodurch die Bewegung des Kunststoffrings (110) mit Bezug auf die Betätigungsstange (100) in mindestens eine Richtung gehemmt wird.

4. Anordnung (300) für das Handbremsventil nach einem der vorhergehenden Ansprüche, wobei der Kunststoffring (110) am Ende von jedem der zwei Arme (118) eine abgeschrägte Fläche (122) beinhaltet.

5. Anordnung (300) für das Handbremsventil nach Anspruch 3, wobei der Kunststoffring (110) eine kurvenförmige Innenfläche (114) beinhaltet und der Vorsprung (112) auf der kurvenförmigen Innenfläche (114) bereitgestellt ist.

6. Anordnung (300) für das Handbremsventil nach einem der vorhergehenden Ansprüche, wobei der Kunststoffring (110) eine Außenfläche (120) aufweist, auf der eine Vielzahl von Rippen (116) bereitgestellt sind, und die Rippen (116) in den Kunststoffring (110) integriert sind.

7. Anordnung (300) für das Handbremsventil nach Anspruch 3, wobei der Vorsprung (112) der Arme (118) des Kunststoffrings (110) eine lineare Bewegung des Kunststoffrings (110) in eine Richtung entlang der Vertiefungen (D) der Betätigungsstange (100) ermöglicht, wobei die ermöglichte die lineare Bewegung des Kunststoffrings (110) entlang einer Längsachse (Y) der Betätigungsstange (100) verläuft.

8. Anordnung (300) für das Handbremsventil nach einem der vorhergehenden Ansprüche, wobei der Kunststoffring (110) entlang einer Längsachse (Y) linear versetzbar ist, wenn der Abschnitt (112) jedes der zwei Arme (118) des Kunststoffrings (110) in die jeweilige Vertiefung (D) aufgenommen ist, wobei der lineare Versatz des Kunststoffrings (110) entlang der Längsachse (Y) in dem Maße begrenzt ist, das von den Abmessungen (M) der Vertiefung (D) zugelassen wird.

9. Anordnung (300) für das Handbremsventil nach einem der vorhergehenden Ansprüche, wobei der Kunststoffring (110) verglichen mit den zwei Armen (118) des Kunststoffrings (110) eine Verbindung (118a) mit einer relativ geringeren Dicke beinhaltet.

## Revendications

1. Ensemble (300) pour une soupape de frein à main d'un véhicule, comprenant :
une tige d'actionnement (100) qui est configurée pour aider à déplacer les positions de frein de la soupape de frein à main, dans lequel la tige d'actionnement (100) comprend deux surfaces sensiblement plates (106) opposées ; et
une bague en plastique (110) comprenant deux bras (118),
**caractérisé en ce que** :
chacune des deux surfaces sensiblement plates (106) opposées de la tige d'actionnement (100) comprend au moins un creux (D) et au moins une partie (112) de chacun des deux bras (118) de la bague en plastique (110) est reçue à l'intérieur du au moins un creux (D).

2. Ensemble (300) pour une soupape de frein à main selon la revendication 1, dans lequel la bague en plastique (110) est assemblée à la tige d'actionnement (100) en séparant les bras (118) et en positionnant ladite partie des bras (118) au niveau du au moins un creux (D) de la tige d'actionnement (100).

3. Ensemble (300) pour une soupape de frein à main selon l'une quelconque des revendications 1 et 2, dans lequel la partie (112) des bras (118) de la bague en plastique (110) qui est reçue à l'intérieur du au moins un creux (D) de la tige d'actionnement (100) comprend une saillie (112) sur chacun des bras (118), et dans lequel la saillie (112) met parfaitement en prise le au moins un creux (D) prévu sur les surfaces sensiblement plates (106) de la tige d'actionnement (100) arrêtant le mouvement de la bague en plastique (110) par rapport à la tige d'actionnement (100) dans au moins une direction.

4. Ensemble (300) pour une soupape de frein à main selon l'une quelconque des revendications ci-dessus, dans lequel la bague en plastique (110) comprend une surface chanfreinée (122) à l'extrémité de chacun des deux bras (118).

5. Ensemble (300) pour une soupape de frein à main selon la revendication 3, dans lequel la bague en plastique (110) comprend une surface interne curviligne (114) et la saillie (112) est prévue sur ladite surface interne curviligne (114).

6. Ensemble (300) pour une soupape de frein à main selon l'une quelconque des revendications ci-dessus, dans lequel la bague en plastique (110) a une surface externe (120) sur laquelle une pluralité de nervures (116) sont prévues, et les nervures (116) font partie intégrante de la bague en plastique (110).

7. Ensemble (300) pour une soupape de frein à main selon la revendication 3, dans lequel la saillie (112) des bras (118) de la bague en plastique (110) permet un mouvement linéaire de la bague en plastique (110) dans une direction le long des creux (D) de la tige d'actionnement (100), dans lequel le mouvement linéaire autorisé de la bague en plastique (110) est parallèle à un axe longitudinal (Y) de la tige d'actionnement (100).

8. Ensemble (300) pour une soupape de frein à main selon l'une quelconque des revendications ci-dessus, dans lequel la bague en plastique (110) peut être déplacée de manière linéaire le long d'un axe longitudinal (Y) lorsque la partie (112) de chacun des deux bras (118) de la bague en plastique (110) est reçue dans le creux (D) respectif, dans lequel le déplacement linéaire de la bague en plastique (110) le long de l'axe longitudinal (Y) est limité dans la mesure où les dimensions (M) dudit creux (D) le permettent.

9. Ensemble (300) pour une soupape de frein à main selon l'une quelconque des revendications ci-dessus, dans lequel la bague en plastique (110) comprend une jonction (118a) avec une épaisseur relativement inférieure par rapport aux deux bras (118) de la bague en plastique (110).
